# EUROPÄISCHE PATENTANMELDUNG

(11) **EP 4 495 859 A1**
(43) Veröffentlichungstag der Anmeldung: **22.01.2025**
(21) Anmeldenummer: 24181976.2
(22) Anmeldetag: 13.06.2024
(51) Int. Cl.: G06Q 30/015, G06Q 90/00, A47L 15/00

(54) **VERFAHREN ZUM ERMITTELN VON WASCHMITTELINFORMATIONEN BASIEREND AUF CROWDSOURCING**

(30) Priorität: 19.07.2023 DE 102023206852
(71) Anmelder: BSH Hausgeräte GmbH, 81739 München (DE)
(72) Erfinder: Almendros Carmona, Ismael Jesus, 13595 Berlin (DE)

(57) **Zusammenfassung**

Die Erfindung betrifft ein Verfahren zum Vervollständigen und/oder Aktualisieren von mindestens einer Daten-bank für Waschmittel, wobei mindestens eine Produktidentifikation eines Waschmittels sensorisch erfasst und basierend auf der Produktidentifikation eine Informationsanfrage an eine Datenbank übermittelt wird, wobei Informationen zum mit der Produktidentifikation verknüpften Waschmittel in der Datenbank fehlen oder unvollständig sind o-der veraltet sind, wobei durch die Datenbank eine Anfrage an mindestens einen Crowdsourcing-Dienst zum Ermitteln von mit der Produktidentifikation verknüpften Informationen zum Waschmittel generiert wird. Des Weiteren betrifft die Erfindung ein Verfahren zum Vervollständigen und/oder Aktualisieren von mindestens einer Datenbank für Wasserhärte sowie ein System.

## Beschreibung

Die vorliegende Erfindung betrifft ein Verfahren zum Vervollständigen und/oder Aktualisieren von mindestens einer Datenbank für Waschmittel, wobei mindestens eine Produktidentifikation eines Waschmittels sensorisch erfasst und basierend auf der Produktidentifikation eine Informationsanfrage an eine Datenbank übermittelt wird. Des Weiteren betrifft die Erfindung ein Verfahren zum Vervollständigen und/oder Aktualisieren von mindestens einer Datenbank für Wasserhärte sowie ein System.

Waschmaschinen mit einer automatischen Dosiervorrichtung können besonders vorteilhaft mit einer automatischen Erkennung des verwendeten Waschmittels ausgerüstet werden. Hierfür kann ein Benutzer nach dem Befüllen der automatischen Dosiervorrichtung einen Barcode auf der Waschmittelverpackung optisch scannen. Dabei werden aus einer externen Datenbank Informationen über das Waschmittel, die Wasserhärte und eine von der Wasserhärte abhängige Dosierung zur Verfügung gestellt. Derartige Datenbanken müssen für einen reibungslosen Betrieb der automatischen Dosiervorrichtung aktuell sein und Informationen zu möglichst allen verfügbaren Waschmitteln beinhalten. Insbesondere können derartige Datenbanken schnell veraltet sein, wenn neue Produkte vermarktet werden. Dies trifft insbesondere auf Waschmittel und auf die regionalen Wasserwerte zu, die einer ständigen Variabilität unterliegen und aus den sich verändernden Umweltbedingungen und Lieferbedingungen resultieren.

Es sind bereits Verfahren bekannt, die die Nachteile einer Datenbank umgehen und einen sogenannten OCR-Scan (Optical Character Recognition, engl. für optische Buchstabenerkennung) der Dosierhinweise auf einer Waschmittelverpackung durchführen. Derartige Verfahren sind jedoch technisch aufwändig und müssen aufgrund der weltweiten Verbreitung der automatischen Dosiervorrichtung bei Waschmaschinen bei einer Vielzahl von unterschiedlichen Sprachen und Schriften funktionieren. Dabei können beschädigte oder verschmutzte Waschmittelverpackungen regelmäßig nicht oder fehlerhaft mittels eines OCR-Scans gelesen werden.

Es ist daher die Aufgabe der vorliegenden Erfindung, ein Verfahren zu schaffen, welches zumindest eine automatisierte Veranlassung einer Vervollständigung und/oder Aktualisierung von Datenbanken ermöglicht. Diese Aufgabe wird durch ein Verfahren mit den Merkmalen des Anspruchs 1, durch ein Verfahren mit den Merkmalen des Anspruchs 6 und durch ein System mit den Merkmalen des Anspruchs 10 gelöst.

Gemäß einem Aspekt der vorliegenden Erfindung wird ein Verfahren zum Vervollständigen und/oder Aktualisieren von mindestens einer Datenbank für Waschmittel bereitgestellt. Dabei kann das Waschmittel in Form einer Marke, eines Namens, eines Wirkstoffs und dergleichen in der Datenbank hinterlegt werden. Vorteilhafterweise können Produktidentifikation des Waschmittels mit dem Waschmittel verknüpft in der Datenbank gespeichert werden. Derartige Produktinformationen können beispielsweise Dosierhinweise bzw. Dosieranleitungen, Bilder des Produkts, Abweichungen der Dosierung bei erhöhter Wasserhärte und/oder bei starker Verschmutzung und dergleichen aufweisen.

In einem Schritt des Verfahrens wird mindestens eine Produktidentifikation eines Waschmittels sensorisch erfasst und basierend auf der Produktidentifikation eine Informationsanfrage an eine Datenbank übermittelt. Dieser Schritt dient dazu, die Produktinformationen des Waschmittels abzurufen, um beispielsweise eine automatische Dosiervorrichtung basierend auf den Produktinformationen zu steuern. Hierdurch kann die automatische Dosiervorrichtung eine präzise Dosierung des Waschmittels gemäß den Anweisungen des Waschmittels realisieren.

In einem weiteren Schritt wird festgestellt, dass Informationen bzw. eine Produktinformationen zum mit der Produktidentifikation verknüpften Waschmittel in der Datenbank fehlen oder unvollständig sind oder veraltet sind. Durch die Datenbank wird daraufhin eine Anfrage an mindestens einen Crowdsourcing-Dienst generiert, um die mit der Produktidentifikation verknüpften Informationen zum Waschmittel zu ermitteln.

Gemäß einem weiteren Aspekt der vorliegenden Erfindung wird ein System zum Durchführen von zumindest einem erfindungsgemäßen Verfahren bereitgestellt. Das System weist mindestens ein Haushaltsgerät und mindestens eine Datenbank auf, die über eine Kommunikationsverbindung mit dem Haushaltsgerät verbindbar ist.

Weiterhin kann das System Mittel zum Aufnehmen von mindestens einer Produktidentifikation bzw. Sensoren aufweisen. Derartige Mittel können elektronisch und/oder optisch ausgestaltet sein. Dabei kann die zumindest eine Produktidentifikation des Waschmittels durch einen Sensor registriert werden, welcher als ein Bestandteil des Haushaltsgeräts oder als ein externer Sensor ausgestaltet ist. Beispielsweise kann das Haushaltsgerät direkt, beispielsweise mittels Bluetooth oder NFC, oder indirekt, beispielsweise über eine WLAN-Verbindung oder Internetverbindung, mit dem externen Sensor gekoppelt sein, um Produktidentifikationen zu empfangen. Bei einer alternativen oder zusätzlichen Ausgestaltung kann ein tragbares Gerät, wie beispielsweise ein Smartphone, einen derartigen externen Sensor aufweisen, um die Produktidentifikation zu ermitteln. Dabei können die Messdaten des externen Sensors unmittelbar an die Datenbank gesendet werden oder indirekt über das Haushaltsgerät, welches die Messdaten des Sensors empfangen und an die Datenbank weiterleiten kann.

Das Waschmittel kann im Sinne der Erfindung als ein Textilpflegemittel, wie beispielsweise ein flüssiges Waschmittel, ein Waschpulver, ein Weichspüler, ein Wäschezusatz, wie beispielsweise ein Bleichmittel oder Färbemittel, ein Pflege- oder Reinigungsmittel für das Haushaltsgerät, wie beispielsweise ein Entkalkungsmittel, ein Geschirrspülmittel oder Geschirrspültabs und dergleichen ausgestaltet sein. Somit kann das Haushaltsgerät beispielhaft als eine Waschmaschine, ein Waschtrockner, ein Geschirrspüler und dergleichen sein.

Das Haushaltsgerät ist vorzugsweise ein wasserführendes Haushaltsgerät. Je nach Ausgestaltung kann das Haushaltsgerät auch ein Dampfgarer, ein Backofen mit Dampffunktion, eine Kaffeemaschine, eine Eiswürfelmaschine und dergleichen sein. Insbesondere kann das erfindungsgemäße Verfahren zum Vervollständigen und/oder Aktualisieren von mindestens einer Datenbank für Wasserhärte auch mit derartigen Haushaltsgeräten besonders vorteilhaft eingesetzt werden.

Die Methode zur Erkennung von Produkten und zur systematischen Erstellung oder Aktualisierung von Datenbanken durch Crowdsourcing kann potenziell für alle Informationen verwendet werden, die das Gerät oder der Benutzer benötigt, wie z. B. Kochanleitungen für Lebensmittel oder Kaffee oder eine Produkterkennung, um das Gültigkeitsdatum eines Lebensmittels bei der Lagerung zu erfahren.

Durch die Verwendung des Crowdsourcing-Dienstes können Datenbanken nach einem im Wesentlichen manuellen Aufbau im Rahmen von Micro-Aufträgen systematisch und flexibel vervollständigt werden. Durch das Verfahren können mit Hilfe des erfindungsgemäßen Systems oder durch die Datenbank systematisch kleine Rechercheaufträge an den Crowdsourcing-Dienst weiterleiten werden, um die fehlenden Informationen für die verschiedenen Produkte, insbesondere Waschmittel, und/oder Standorte zu erfassen. Das zu erfassende Waschmittel wird mit Hilfe der übermittelten Produktidentifikation eindeutig identifiziert.

Die Datenbank kann in Form einer Cloud ausgestaltet sein und die Informationen von Waschmitteln mit entsprechender Produktidentifikation, beispielsweise in Form eines Barcodes, koppeln. Wenn die Datenbank, wie in Form eines Datenbankdienstes ausgestaltet sein kann, keine Informationen für ein neues Produkt aufweist, wird ein Auftrag an den Crowdsourcing-Dienst zur Durchführung einer Recherchen ausgelöst, um die Informationen zum unbekannten Waschmittel herauszufinden und zu dokumentieren.

Eine derartige Auslösung zur Durchführung der Recherche kann bei jeder Anfrage der Datenbank hinsichtlich einer Produktidentifikation mit unbekannten oder unvollständigen Informationen erfolgen.

Bei einer alternativen Ausgestaltung kann die Auslösung zur Durchführung der Recherche durch den Crowdsourcing-Dienst erst nach mehrfach erfolgter Anfrage zu einer bestimmten Produktidentifikation durchgeführt werden. Somit kann der Crowdsourcing-Dienst beispielsweise nach 3 bis 15maliger Anfrage eines bestimmten Waschmittels mit der Recherche der entsprechenden Informationen beauftragt werden.

Der Crowdsourcing-Dienst kann anschließend ein Ergebnis zurück an die Datenbank liefern, welches optimalerweise alle fehlenden oder aktualisierten Informationen des Waschmittels aufweist. Dieses Ergebnis kann automatisiert oder durch mindestens einen Mitarbeiter der Datenbank geprüft in die Datenbank eingefügt werden, um diese Informationen zur Produktidentifikation des Waschmittels zur Verfügung zu stellen.

Die Integration der Recherchen durch Crowdsourcing-Dienste ermöglicht es, dass die Rechercheergebnisse schnell und unkompliziert nach der Anfrage zur Verfügung gestellt werden. Vorteilhafterweise ist diese automatisierte Vervollständigung der Datenbank nicht lokal begrenzt und kann weltweit gleichermaßen unkompliziert umgesetzt werden.

Bei einer Ausführungsform wird die Produktidentifikation in Form eines Barcodes oder eines QR-Codes optisch erfasst. Diese Maßnahme ermöglicht eine technisch einfache Ermittlung der Produktidentifikation mit Hilfe von optisch agierenden Sensoren, beispielsweise in einem Smartphone oder eines Haushaltsgeräts.

Gemäß einem weiteren Ausführungsbeispiel werden durch die durch den Crowdsourcing-Dienst ermittelten Informationen zum Waschmittel fehlende oder unvollständige Informationen in der Datenbank zum mit der Produktidentifikation verknüpftem Waschmittel vervollständigt oder veraltete Informationen in der Datenbank aktualisiert. Hierdurch kann die Datenbank besonders unkompliziert im Rahmen von automatisierten Rechercheaufträgen aktualisiert und vervollständigt werden.

Nach einer weiteren Ausführungsform wird ein Vervollständigen oder Aktualisieren der Informationen in der Datenbank zum mit der Produktidentifikation verknüpftem Waschmittel automatisiert oder manuell, insbesondere durch einen Mitarbeiter, überprüft und freigegeben. Neben der automatisierten Übernahme der Rechercheergebnisse des Crowdsourcing-Diensts können die empfangenen Rechercheergebnisse in einem Zwischenschritt des Verfahrens durch einen Menschen oder eine Software überprüft werden. Dieser Zwischenschritt erfolgt vorteilhafterweise vor einer Bereitstellung bzw. Veröffentlichung der ermittelten Informationen zur Produktidentifikation.

Gemäß einem weiteren Ausführungsbeispiel wird im Rahmen einer Ermittlung der Informationen zur übermittelten Produktidentifikation durch den mindestens einen Crowdsourcing-Dienst, die Anfrage zum Ermitteln von Informationen an einen Händler und/oder einen Hersteller übermittelt wird und/oder eine Internetrecherche zur Produktidentifikation durchgeführt. Wird ein negatives bzw. ergebnisloses Rechercheergebnis an die Datenbank durch den Crowdsourcing-Dienst zurückgesendet, kann die Datenbank oder ein entsprechender Datenbankdienst den Rechercheauftrag weiterleiten oder ausweiten. Im Rahmen dieser Weiterleitung oder Ausweitung können weitere Instanzen, wie Händler und Hersteller der Waschmittel hinsichtlich der fehlenden Informationen angefragt werden.

Nach einem weiteren Aspekt der vorliegenden Erfindung wird ein Verfahren zum Vervollständigen und/oder Aktualisieren von mindestens einer Datenbank für Wasserhärte bereitgestellt. Dieses Verfahren kann zusammen oder unabhängig von dem Verfahren zum Vervollständigen und/oder Aktualisieren von mindestens einer Datenbank für Waschmittel umgesetzt werden. Da bei der Waschmitteldosierung die Wasserhärte ein entscheidender Faktor ist, kann bei der Waschmitteldosierung dieses Verfahren vorteilhaft berücksichtigt bzw. implementiert werden.

Bei einer alternativen Ausgestaltung kann das Verfahren zum Vervollständigen und/oder Aktualisieren von mindestens einer Datenbank für Waschmittel auch separat bzw. unabhängig durchgeführt werden, um beispielsweise bei Haushaltsgeräten bestimmte Entkalkungszyklen festzulegen oder Wechselintervalle von Entkalkungsfiltern zu bestimmen. Derartige Haushaltsgeräte können beispielsweise Kaffeemaschinen, Dampfgarer, aber auch Waschmaschinen oder Geschirrspüler mit manueller Waschmitteldosierung und dergleichen sein.

In einem Schritt des Verfahrens wird ein Standort eines Haushaltsgeräts und/oder eines Anwenders ermittelt und an eine Datenbank gesendet. Diese Datenbank kann in Form eines Datenbankdienstes in einer Cloud ausgeführt sein. Dabei kann diese Datenbank in die Datenbank für Waschmittel integriert oder parallel zu bzw. unabhängig von einer derartigen Datenbank ausgestaltet sein.

Basierend auf dem ermittelten Standort wird mindestens eine dem Standort zugeordnete Wasserhärte empfangen, um die Wasserhärte, beispielsweise bei einer Waschmitteldosierung zu berücksichtigen.

Die Wasserhärte kann als ein Härtegrad, beispielsweise in einer "dH" Einheit oder in Form eines Wertebereichs berücksichtigt werden. Je nach Ausgestaltung kann die Wasserhärte auch als "Weich", "Mittel", und "Hart" klassifiziert werden.

Wird zum ermittelten Standort beispielsweise keine Wasserhärte in der Datenbank gefunden, wird eine Anfrage an mindestens einen Crowdsourcing-Dienst gesendet, um die dem Standort zugeordnete Wasserhärte zu ermitteln. Hierdurch wird ein automatisierter Rechercheauftrag an den Crowdsourcing-Dienst durch die Datenbank oder einen Dienst der Datenbank generiert. Diese Maßnahme kann dazu eingesetzt werden, die Datenbank bei Vorliegen von fehlenden Daten zu aktualisieren. Die fehlenden oder nicht aktuellen Werte für Wasserhärte bzw. Härtegrad werden dabei selbstständig durch Kundenanfragen aufgedeckt.

Analog zum Verfahren zum Vervollständigen und/oder Aktualisieren von mindestens einer Datenbank für Waschmittel, können die von dem Crowdsourcing-Dienst ermittelten Rechercheergebnisse an die Datenbank zurückgesendet werden. Insbesondere positive Ergebnisse bzw. Rechercheergebnisse können anschließend automatisiert oder durch einen Mitarbeiter der Datenbank geprüft und in die Datenbank integriert werden. Somit werden die neuen Informationen hinsichtlich der Wasserhärte nach einer Überprüfung den Benutzern zur Verfügung gestellt.

Gemäß einem Ausführungsbeispiel wird bei einer dem ermittelten Standort zugeordneten Wasserhärte in der Datenbank, die entsprechende Wasserharte in Form einer Rückmeldung an den Anwender und/oder ein Haushaltsgerät gesendet und zur Waschmitteldosierung und/oder einer Anpassung einer Waschmitteldosierung eingesetzt. Diese Maßnahme ermöglicht beispielsweise die Anpassung der Waschmitteldosierung an den tatsächlichen Wert der Wasserhärte in dem geografischen Gebiet des Haushaltsgeräts. Alternativ oder zusätzlich kann die empfangene Wasserhärte auch für die Einrichtung einer regelmäßigen Entkalkung des Haushaltsgeräts verwendet werden, wobei der Wert der Wasserhärte die Intervalle für die Entkalkung des Haushaltsgeräts erhöhen oder verringern kann. Die entsprechenden Werte der Wasserhärte können automatisiert im Betrieb des Haushaltsgeräts berücksichtigt werden oder durch den Benutzer bzw. Anwender manuell eingegeben werden.

Nach einer weiteren Ausführungsform wird basierend auf der fehlenden Zuordnung einer Wasserhärte zu einem Standort ein Gebiet, insbesondere in Form eines Polygons, ermittelt, welches von einem Wasserversorger beliefert wird, wobei eine für den Standort bestimmte Wasserhärte oder ein Wertebereich einer Wasserhärte dem ermittelten Gebiet zugeordnet wird. Somit kann für jeden Standort ein Härtegrad zugeordnet werden. Der entsprechende Härtegrad des Wassers kann durch geografische Polygone und die Postleitzahl oder kleinere geografische Gebiete indiziert werden.

Bedingt durch die Tatsache, dass ein bestimmtes Gebiet üblicherweise durch einen Wasserversorger beliefert wird, kann daraus geschlossen werden, dass dieses gesamte Gebiet eine konstante Wasserhärte aufweist. Somit kann dieses gesamte Gebiet als ein Polygon in einer digitalen Karte begrenzt und mit einer Wasserhärte bzw. einem Wert für die Wasserhärte oder einem Wertebereich einer Wasserhärte versehen werden. Jeder Standort, beispielsweise in Form von GPS-Koordinaten, welcher in diesem Bereich Gebiet oder dem Polygon liegt, kann bei einer anschließenden Anfrage an die Datenbank den zugewiesenen Wert der Wasserhärte erhalten. Die Datenbank kann dabei in Form einer digitalen Karte und/oder in Form einer Wertetabelle mit einer Vielzahl von GPS-Koordinaten oder Grenzen in Form von GPS-Koordinaten mit entsprechenden Werten für die Wasserhärte ausgestaltet sein.

Gemäß einem weiteren Ausführungsbeispiel wird die Wasserhärte in Form eines Absolutwerts oder in Form eines Wertebereichs durch den Crowdsourcing-Dienst ermittelt, wobei die Wasserhärte basierend auf einer Internetrecherche und/oder einer Vorort-Probenahme durch den Crowdsourcing-Dienst ermittelt und in der Datenbank hinterlegt wird. Hierdurch kann die Wasserhärte flexibel basierend auf einer Vielzahl möglicher Methoden ermittelt und in der Datenbank hinterlegt werden.

Die Vorteile und Merkmale, die oben im Zusammenhand mit der Vorrichtung erläutert wurden, gelten analog auch für das Verfahren und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- Fig. 1: eine schematische Darstellung eines erfindungsgemäßen Systems gemäß einer Ausführungsform.
- Fig. 2: ein schematisches Ablaufdiagramm zum Veranschaulichen eines Verfahrens zum Vervollständigen und/oder Aktualisieren von mindestens einer Datenbank für Waschmittel gemäß einer Ausführungsform.
- Fig. 3: ein schematisches Ablaufdiagramm zum Veranschaulichen eines Verfahrens zum Vervollständigen und/oder Aktualisieren von mindestens einer Datenbank für Wasserhärte gemäß einer Ausführungsform.

In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

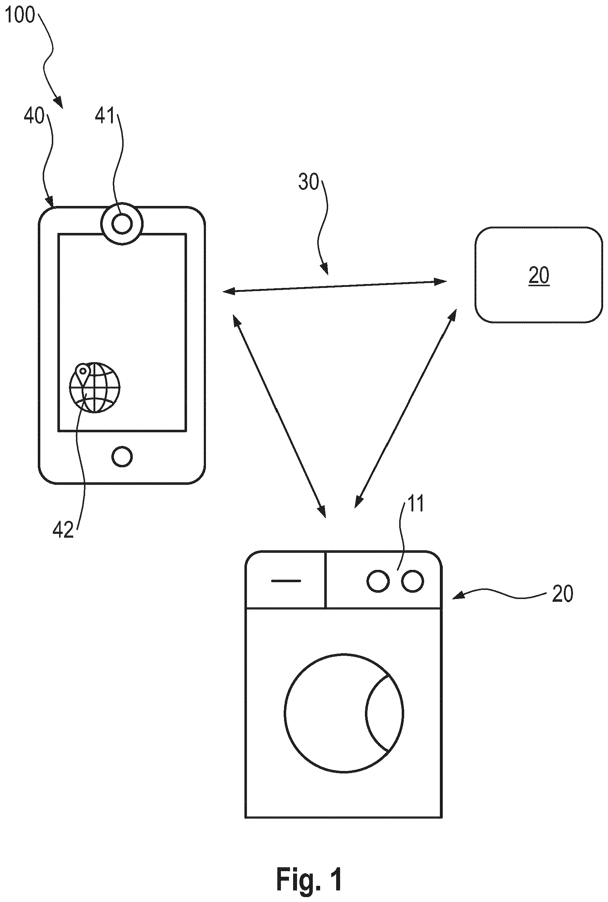

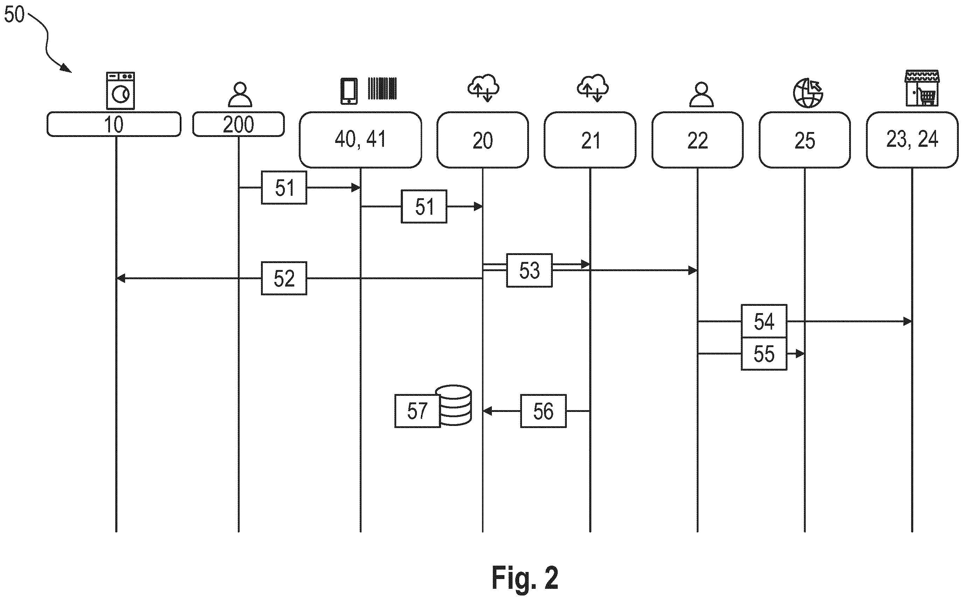

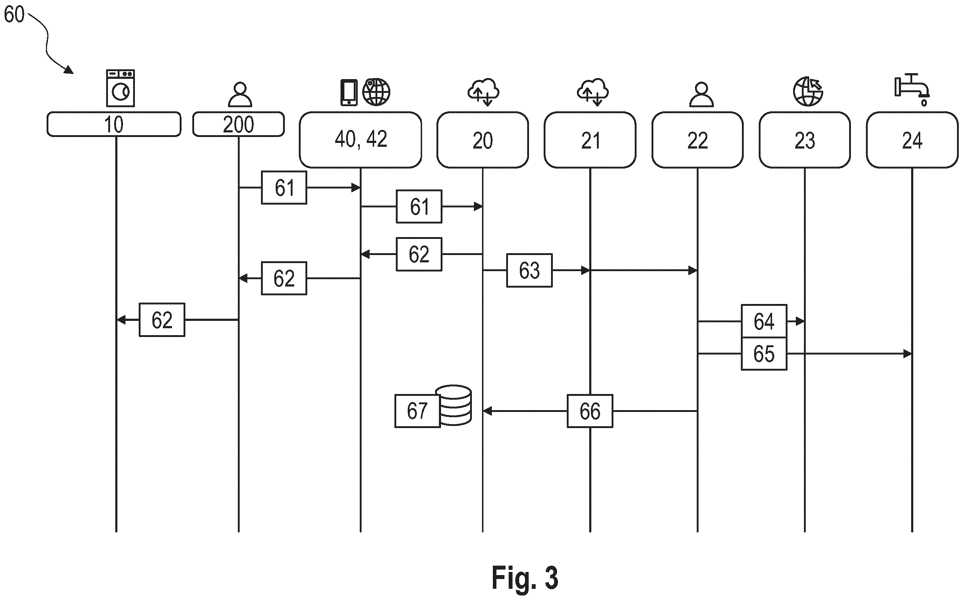

Die Fig. 1 zeigt eine schematische Darstellung eines erfindungsgemäßen Systems 100 gemäß einer Ausführungsform. Das System 100 dient zum Durchführen von zumindest einem erfindungsgemäßen Verfahren, welche in den schematischen Ablaufdiagrammen in Fig. 2 und Fig. 3 veranschaulicht sind.

Das System 100 weist im dargestellten Ausführungsbeispiel ein Haushaltsgerät 10 und mindestens eine Datenbank 20 auf, die über eine Kommunikationsverbindung 30 mit dem Haushaltsgerät 10 verbindbar ist. Das Haushaltsgerät 10 ist der Einfachheit halber als eine Waschmaschine mit einer automatischen Dosiervorrichtung ausgestaltet.

Die Datenbank 20 ist im gezeigten Beispiel ist dazu eingerichtet, standortabhängig eine Wasserhärte bereitzustellen und Informationen zu einer Dosierung in Abhängigkeit von einer Produktidentifikation eines Waschmittels auszugeben.

Weiterhin weist das System 100 Mittel 41, 42 zum Aufnehmen von mindestens einer Produktidentifikation bzw. Sensoren auf. Derartige Mittel 41, 42 können elektronisch und/oder optisch ausgestaltet sein. Dabei kann die zumindest eine Produktidentifikation des Waschmittels durch einen optischen Sensor 41, beispielsweise in Form einer Kamera detektiert werden, wenn Produktidentifikation als ein Barcode oder ein QR-Code ausgestaltet ist. Ein Standort oder eine Standortinformation kann mit Hilfe eines weiteren Mittels oder Sensors 42 in Form eines GPS-Sensors ermittelt werden.

Die Sensoren 41, 42 sind im gezeigten Ausführungsbeispiel als externe Sensoren eines tragbaren Geräts 40, beispielsweise eines Smartphones, ausgestaltet. Somit kann das Haushaltsgerät 10 direkt, beispielsweise mittels Bluetooth oder NFC, oder indirekt, beispielsweise über eine WLAN-Verbindung oder Internetverbindung, mit den externen Sensoren 41, 42 gekoppelt sein, um Produktidentifikationen zu empfangen. Bei der gezeigten Ausgestaltung können die Messdaten der externen Sensoren 41, 42 unmittelbar an die Datenbank 20 gesendet werden.

Das tragbare Gerät 40 kann beispielsweise eine sogenannte Web-App aufweisen, die die Messdaten der Sensoren 41, 42 empfangen und in unverarbeiteter oder in verarbeiteter Form weiterleiten kann. Die Messdaten können zu einer Recheneinheit bzw. Steuereinheit 11 des Haushaltsgeräts 10 weitergeleitet werden, welcher darauf basierend eine Anfrage an die Datenbank 20 generieren und absenden kann.

Die Verbindung 30 zwischen dem Haushaltsgerät 10 und dem tragbaren Gerät 40 kann beispielsweise mit Hilfe einer WLAN-Verbindung und/oder Bluetooth-Verbindung realisiert werden. Die Anfrage der Recheneinheit 11 des Haushaltsgeräts 10 an die Datenbank 20 kann mittels einer Kommunikationsverbindung 30 beispielsweise in Form einer konventionellen Internetverbindung erfolgen.

Die Anfrage der Recheneinheit 11 umfasst beispielsweise ein Senden einer Produktidentifikation eines Waschmittels und Standortinformationen, beispielsweise GPS-Daten. Die Datenbank 20 kann in einem optimalen Fall darauf hin als Rückmeldung die zu der Produktidentifikation passenden Informationen zur Dosierung und eine standortabhängige Wasserhärte liefern. Anhand der empfangenen Wasserhärte können die Informationen zur Waschmitteldosierung des mittels der Produktidentifikation ermittelten Waschmittels angepasst werden. Mit diesen Informationen bzw. Daten kann eine nicht dargestellte automatische Dosiervorrichtung des Haushaltsgeräts 10 eine optimale Dosierung des Waschmittels einstellen und einen beispielhaften Waschvorgang durchführen. Dabei wird eine zu geringe Waschmittelmenge aufgrund einer erhöhen Wasserhärte vermieden. Im Umkehrschluss wird durch diese Maßnahme auch Waschmittel eingespart, da ein unnötiges Überdosieren des Waschmittels aufgrund der konkreten Informationen zur Waschmitteldosierung unterbunden wird.

In der Fig. 2 und Fig. 3 werden Verfahren schematisch beschrieben, die durchgeführt werden, wenn in der Datenbank 20 beispielsweise keine Wasserhärte zu der gesendeten Standortinformation und/oder keine Informationen zum Waschmittel entsprechend der übermittelten Produktidentifikation gefunden werden.

Fig. 2 zeigt ein schematisches Ablaufdiagramm zum Veranschaulichen eines Verfahrens 50 zum Vervollständigen und/oder Aktualisieren von mindestens einer Datenbank 20 für Waschmittel gemäß einer Ausführungsform.

In einem Schritt 51 des Verfahrens 50 wird mindestens eine Produktidentifikation eines Waschmittels sensorisch erfasst und basierend auf der Produktidentifikation eine Informationsanfrage an eine Datenbank 20 übermittelt. Dieser Schritt 51 wird vorteilhafterweise durch einen Anwender 200 eingeleitet. Der Schritt dient dazu, die Produktinformationen des Waschmittels abzurufen, um beispielsweise eine automatische Dosiervorrichtung des Haushaltsgeräts 10 basierend auf den Produktinformationen zu steuern. Hierdurch kann die automatische Dosiervorrichtung eine präzise Dosierung des Waschmittels gemäß den Anweisungen des Waschmittels realisieren. Bei einem optimalen Szenario mit einer bekannten Produktidentifikation liefert die Datenbank 20 eine Rückmeldung 52 mit entsprechenden Dosierhinweisen, die durch das Haushaltsgerät 10 verwendet werden können. Dieser Schritt 52 kann durch den Anwender 200 bestätigt oder freigegeben werden.

In der Datenbank 20 können Produktidentifikationen von Waschmitteln, mit entsprechenden Produktidentifikationen verknüpft, gespeichert vorliegen. Derartige Produktinformationen können beispielsweise Dosierhinweise bzw. Dosieranleitungen, Bilder des Produkts, Abweichungen der Dosierung bei erhöhter Wasserhärte und/oder bei starker Verschmutzung und dergleichen aufweisen.

Wird in einem Schritt 53 festgestellt, dass Informationen bzw. eine Produktinformation zum mit der Produktidentifikation verknüpften Waschmittel in der Datenbank 20 fehlen oder unvollständig sind oder veraltet sind, dann wird durch die Datenbank 20 in eine Anfrage an mindestens einen Crowdsourcing-Dienst 21 generiert, um die mit der Produktidentifikation verknüpften Informationen zum Waschmittel zu ermitteln. Der Crowdsourcing-Dienst 21 kann daraufhin Crowdsourcing Mitarbeiter oder Researcher 22 beauftragen, die entsprechenden Informationen zur vorgegebenen Produktidentifikation zu ermitteln.

Die Crowdsourcing Mitarbeiter 22 können in einem Schritt 54 eine Anfrage zum Ermitteln von Informationen an einen Händler 23 und/oder einen Hersteller 24 übermitteln oder entsprechende Informationen direkt anfragen. In einem alternativen oder zusätzlichen Schritt 55 können die Crowdsourcing Mitarbeiter 22 eine Internetrecherche 25 zur Produktidentifikation durchführen.

Anschließend können in einem Schritt 56 die ermittelten Informationen zum Waschmittel in der Datenbank 20 zum mit der Produktidentifikation verknüpftem Waschmittel vervollständigt oder veraltete Informationen in der Datenbank 20 aktualisiert werden. Diese Informationen können je nach Ausgestaltung des Verfahrens 50 eine Freigabe durch einen Mitarbeiter der Datenbank 20 benötigen.

In einem weiteren Schritt 57 werden die vervollständigten Informationen Anwendern 200 zur Verfügung gestellt.

Die Fig. 3 zeigt ein schematisches Ablaufdiagramm zum Veranschaulichen eines Verfahrens 60 zum Vervollständigen und/oder Aktualisieren von mindestens einer Datenbank 20 für Wasserhärte gemäß einer Ausführungsform. Dieses Verfahren 60 kann zusammen oder unabhängig von dem in Fig. 2 gezeigten Verfahren 50 zum Vervollständigen und/oder Aktualisieren von mindestens einer Datenbank 20 für Waschmittel umgesetzt werden. Da bei der Waschmitteldosierung die Wasserhärte ein entscheidender Faktor ist, kann bei der Waschmitteldosierung dieses Verfahren 60 berücksichtigt bzw. implementiert werden.

In einem Schritt 61 des Verfahrens 60 wird ein Standort eines Haushaltsgeräts 10 und/oder eines Anwenders 200 mit Hilfe eines GPS-Sensors 42 ermittelt und an eine Datenbank 20 gesendet, um eine Wasserhärte an diesem Standort abzurufen. Der Standort kann alternativ oder zusätzlich basierend auf einer IP-Adresse einer Netzwerkverbindung oder Internetverbindung und/oder basierend auf Verbindungsinformationen eines Mobilfunkmasts ermittelt werden. Dies kann beispielsweise mit Hilfe des tragbaren Geräts 40 realisiert werden.

Die Datenbank 20 kann in Form eines Datenbankdienstes in einer Cloud ausgeführt sein. Dabei kann diese Datenbank 20 in die Datenbank für Waschmittel integriert oder parallel zu bzw. unabhängig von einer derartigen Datenbank 20 ausgestaltet sein.

Basierend auf dem ermittelten Standort wird in einem Schritt 62 mindestens eine dem Standort zugeordnete Wasserhärte empfangen, um die Wasserhärte, beispielsweise bei einer Waschmitteldosierung zu berücksichtigen. Diese Rückmeldung der Datenbank 20 kann direkt auf das tragbare Gerät 40 und/oder an die Recheneinheit 11 des Haushaltsgeräts 10 übermittelt werden.

Die Wasserhärte kann als ein Härtegrad, beispielsweise in einer "dH" Einheit oder in Form eines Wertebereichs berücksichtigt werden. Je nach Ausgestaltung kann die Wasserhärte auch als "Weich", "Mittel", und "Hart" klassifiziert werden.

Wird zum ermittelten Standort beispielsweise keine Wasserhärte in der Datenbank 20 gefunden, wird in einem Schritt 63 des Verfahrens 60 eine Anfrage an mindestens einen Crowdsourcing-Dienst 21 gesendet, um die dem Standort zugeordnete Wasserhärte zu ermitteln. Der Crowdsourcing-Dienst 21 beauftragt daraufhin einen oder mehrere Crowdsourcing Mitarbeiter oder Mitwirkende 22, um den Auftrag abzuarbeiten und die entsprechenden Werte für die Wasserhärte zu ermitteln.

Die Mitarbeiter 22 können im Rahmen des Rechercheauftrags beispielsweise in einem Schritt 64 eine Internetrecherche 23 durchführen. In einem alternativen oder zusätzlichen Schritt 65 kann eine chemische Analyse 24 des Wassers durchgeführt werden, um die Wasserhärte direkt zu messen.

Das Ergebnis des Rechercheauftrags kann in einem weiteren Schritt 66 analog zum in Fig. 2 beschriebenen Verfahren 50 in der Datenbank 20 hinterlegt werden und anschließen den Anwendern 200 zur Verfügung gestellt 67 werden. Dabei kann in einer nicht dargestellten Zwischeninstanz eine Freigabe und/oder Überprüfung der Rechercheergebnisse durchgeführt werden.

### Bezugszeichenliste

10 - Haushaltsgerät
11 - Recheneinheit / Steuereinheit
20 - Datenbank
21 - Crowdsourcing-Dienst
22 - Crowdsourcing Mitarbeiter
23 - Händler
24 - Hersteller
25 - Internetrecherche
30 - Kommunikationsverbindung
40 - tragbares Gerät
41 - Sensor / Kamerasensor
42 - Sensor / GPS-Sensor
50 - Verfahren zum Vervollständigen einer Datenbank für Waschmittel
51 - Produktidentifikation erfassen
52 - Rückmeldung
53 - Anfrage an einen Crowdsourcing-Dienst
54 - Anfragen von Händlern oder Herstellern
55 - Internetrecherche durchführen
56 - Übermitteln des Rechercheergebnisses an die Datenbank
57 - Zur Verfügung stellen von vervollständigten Informationen
60 - Verfahren zum Vervollständigen einer Datenbank für Wasserhärte
61 - Standort erfassen
62 - Rückmeldung
63 - Anfrage an einen Crowdsourcing-Dienst
64 - Internetrecherche durchführen
65 - Vor-Ort-Messung
66 - Übermitteln des Rechercheergebnisses an die Datenbank
67 - Zur Verfügung stellen von vervollständigten Informationen
100 - System
200 - Anwender

## Patentansprüche

1. Verfahren (50) zum Vervollständigen und/oder Aktualisieren von mindestens einer Datenbank (20) für Waschmittel, wobei mindestens eine Produktidentifikation eines Waschmittels sensorisch erfasst und basierend auf der Produktidentifikation eine Informationsanfrage an eine Datenbank (20) übermittelt (51) wird, wobei Informationen zum mit der Produktidentifikation verknüpften Waschmittel in der Datenbank (20) fehlen oder unvollständig sind oder veraltet sind, wobei durch die Datenbank (20) eine Anfrage (53) an mindestens einen Crowdsourcing-Dienst (21) zum Ermitteln von mit der Produktidentifikation verknüpften Informationen zum Waschmittel generiert wird.

2. Verfahren nach Anspruch 1, wobei die Produktidentifikation in Form eines Barcodes oder eines QR-Codes optisch erfasst wird.

3. Verfahren nach Anspruch 1 oder 2, wobei durch die durch den Crowdsourcing-Dienst (21) ermittelten Informationen zum Waschmittel fehlende oder unvollständige Informationen in der Datenbank (20) zum mit der Produktidentifikation verknüpftem Waschmittel vervollständigt oder veraltete Informationen in der Datenbank (20) aktualisiert werden.

4. Verfahren nach Anspruch 3, wobei ein Vervollständigen oder Aktualisieren der Informationen in der Datenbank (20) der mit der Produktidentifikation verknüpftem Waschmittel automatisiert oder manuell, insbesondere durch einen Mitarbeiter, überprüft und freigegeben wird.

5. Verfahren nach einem der Ansprüche 1 bis 4, wobei im Rahmen einer Ermittlung der Informationen zur übermittelten Produktidentifikation durch den mindestens einen Crowdsourcing-Dienst (21), die Anfrage zum Ermitteln von Informationen an einen Händler (23) und/oder einen Hersteller (24) übermittelt wird und/oder eine Internetrecherche (25) zur Produktidentifikation durchgeführt wird.

6. Verfahren (60) zum Vervollständigen und/oder Aktualisieren von mindestens einer Datenbank (20) für Wasserhärte, wobei ein Standort eines Haushaltsgeräts (10) und/oder eines Anwenders (200) ermittelt und an eine Datenbank (20) gesendet (61) wird, wobei basierend auf dem Standort mindestens eine dem Standort zugeordnete Wasserhärte empfangen (62) wird, um die Wasserhärte beispielsweise bei einer Waschmitteldosierung zu berücksichtigen, wobei bei einer fehlenden Wasserhärte zum übermittelten Standort, eine Anfrage (63) an mindestens einen Crowdsourcing-Dienst (21) gesendet wird, um die dem Standort zugeordnete Wasserhärte zu ermitteln.

7. Verfahren nach Anspruch 6, wobei bei einer dem ermittelten Standort zugeordneten Wasserhärte in der Datenbank (20), die entsprechende Wasserharte in Form einer Rückmeldung (62) an den Anwender (200) und/oder das Haushaltsgerät (10) gesendet und zur Waschmitteldosierung und/oder einer Anpassung einer Waschmitteldosierung eingesetzt wird.

8. Verfahren nach Anspruch 6 oder 7, wobei basierend auf der fehlenden Zuordnung einer Wasserhärte zu einem Standort ein Gebiet, insbesondere in Form eines Polygons, ermittelt wird, welches von einem Wasserversorger beliefert wird, wobei eine für den Standort bestimmte Wasserhärte oder ein Wertebereich einer Wasserhärte dem ermittelten Gebiet zugeordnet wird.

9. Verfahren nach einem der Ansprüche 6 bis 8, wobei die Wasserhärte in Form eines Absolutwerts oder in Form eines Wertebereichs durch den Crowdsourcing-Dienst ermittelt wird, wobei die Wasserhärte basierend auf einer Internetrecherche und/oder einer Vorort-Probenahme durch den Crowdsourcing-Dienst ermittelt und in der Datenbank hinterlegt wird.

10. System (100) zum Durchführen eines der Verfahren (50, 60) gemäß einem der vorhergehenden Ansprüche, aufweisend mindestens ein Haushaltsgerät (10) und mindestens eine Datenbank (20), die über eine Kommunikationsverbindung (30) mit dem Haushaltsgerät (10) verbindbar ist.
